# DEMANDE DE BREVET EUROPEEN

(11) **EP 4 701 018 A1**
(43) Date de publication de la demande: **25.02.2026**
(21) Numéro de dépôt: 25192312.4
(22) Date de dépôt: 29.07.2025
(51) Int. Cl.: H02J 1/08, B64D 27/06, H02J 1/10, H02J 7/34

(54) **PROCÉDÉ AMÉLIORÉ DE CONTRÔLE D'UN SYSTÈME ÉLECTRIQUE D'UN AÉRONEF HYBRIDE, DISPOSITIF DE CONTRÔLE, ET AÉRONEF HYBRIDE**

(30) Priorité: 31.07.2024 FR 2408468
(71) Demandeur: Airbus Operations (S.A.S.), 31060 Toulouse Cedex 9 (FR)
(72) Inventeur: DASTE, Pierre, 31060 TOULOUSE (FR); KAHALERRAS, Mohamed Khaled, 31060 TOULOUSE (FR); LIENHARDT, Anne-Marie, 31060 TOULOUSE (FR)
(74) Mandataire: Cabinet Le Guen Maillet

(57) **Abrégé**

L'invention concerne un procédé de contrôle d'un système électrique d'un aéronef hybride, le système électrique comprenant au moins deux barres omnibus configurées pour opérer des transferts d'énergie électrique entre plusieurs sous-systèmes dudit aéronef et comprenant au moins un dispositif de contrôle de régulation centralisé, le procédé comprenant une régulation d'un niveau de tension opérée par le contrôleur à partir d'un ou plusieurs points de régulation variables déterminés parmi une pluralité de points de régulation prédéfinis et localisés chacun dans l'une ou l'autre des barres omnibus, en fonction de la nature des transferts de puissance électrique à opérer.

## Description

### DOMAINE TECHNIQUE

La présente invention concerne un procédé de contrôle de régulation électrique dans un système électrique d'un aéronef présentant une architecture d'aéronef à propulsion hybride électrique, appelé ci-après aéronef hybride, comprenant une ou plusieurs sources d'énergie ainsi qu'un ou plusieurs convertisseurs de puissance respectivement associés à ces sources. L'invention concerne plus particulièrement le contrôle de points de référence électrique pour réguler le fonctionnement de convertisseurs de tension opérant en différents points d'un aéronef hybride.

### ÉTAT DE LA TECHNIQUE ANTÉRIEURE

Les aéronefs hybrides utilisent classiquement des moteurs thermiques, par exemple de type turbo réacteur ou encore de type moteur à soufflante non carénée, ainsi que des moteurs électriques couplés ou non aux moteurs thermiques. Les moteurs thermiques, dont la fonction première est d'assurer la propulsion de l'aéronef, comprennent classiquement des générateurs capables de générer de l'énergie électrique à partir d'une rotation d'au moins un arbre mécanique. D'autre part, des batteries permettent d'opérer une assistance à la propulsion thermique en apportant un surplus d'énergie à un ou plusieurs moteurs thermiques pour des opérations nécessitant une grande puissance, telles que le démarrage par exemple, ou telles qu'une assistance à l'accélération du moteur thermique. Ces batteries peuvent être rechargées lors de certaines phases de vol. La diversité des configurations ou reconfigurations nécessaires, compte-tenu de ces nouvelles architectures hybrides, amène une diversité de combinaisons de flux possibles de transfert de puissance électrique dans les systèmes électriques d'un tel aéronef hybride. De plus, les transferts de puissance sont susceptibles d'intervenir en des points éloignés les uns des autres. Il se peut, par exemple, qu'un transfert de puissance soit nécessaire d'un arbre moteur à un autre arbre moteur lors d'une assistance moteur, et ce, en passant par une barre omnibus située dans une nacelle. Dans un autre cas, tel qu'une assistance à un moteur, le transfert de puissance à l'aide d'une batterie peut nécessiter un transfert d'énergie par une barre omnibus dans un fuselage situé à une distance importante d'une nacelle. Il apparait alors complexe d'opérer des régulations en tension ou en courant, le cas échéant, dans les différents circuits électriques d'un système électrique d'un aéronef hybride, tout en assurant une stabilité électrique du système, et la situation peut être améliorée.

### EXPOSÉ DE L'INVENTION

Un objet de la présente invention est de contrôler simultanément et dynamiquement la régulation de plusieurs sources électriques bidirectionnelles couplées à une ou plusieurs batteries dans une architecture d'aéronef à propulsion hybride dans laquelle une ou plusieurs sources de puissance (moteur ou générateur) sont utilisées de façon réversible (de façon bidirectionnelle).

A cet effet, il est proposé un procédé de contrôle d'un système électrique d'un aéronef hybride, le système électrique comprenant au moins deux barres omnibus configurées pour opérer des transferts d'énergie électrique dans ou entre plusieurs sous-systèmes dudit système électrique d'aéronef, ledit procédé comprenant au moins une régulation d'un niveau de tension à partir d'un point de référence de régulation variable, déterminé sous contrôle d'un dispositif de contrôle centralisé, parmi une pluralité de points de référence de régulation prédéfinis et localisés chacun dans l'une ou l'autre des barres omnibus, en fonction de conditions opérationnelles de l'aéronef hybride.

Selon un mode de réalisation, la régulation d'un niveau de tension est opérée séquentiellement à partir de deux points de régulation prédéfinis, l'un puis l'autre, dont l'un, est défini dans une première barre omnibus, comprise dans une nacelle de moteur de l'aéronef, et l'autre est défini dans une deuxième barre omnibus, comprise dans le fuselage de l'aéronef.

Selon un mode de réalisation, la régulation d'un niveau de tension opérée séquentiellement comprend des étapes :
- obtenir des informations représentatives desdites conditions opérationnelles de l'aéronef,
- déterminer un point de référence de régulation à utiliser à partir desdites informations obtenues, puis,
- configurer un ou plusieurs convertisseurs de puissance de sorte à opérer une régulation de tension ou de courant à partir dudit point de régulation déterminé.

Selon un mode de réalisation, la détermination d'un point de régulation à utiliser à partir desdites informations obtenues comprend une lecture d'une table d'informations associant une pluralité de combinaisons de conditions opérationnelles de l'aéronef, d'une part, et au moins un point de référence de régulation à utiliser pour chacune desdites combinaisons, d'autre part, ladite table étant mémorisée dans une mémoire d'informations dudit aéronef hybride.

Un autre objet de l'invention est un système électrique d'aéronef hybride, le système électrique comprenant au moins deux barres omnibus configurées pour opérer des transferts d'énergie électrique dans ou entre plusieurs sous-systèmes du système électrique d'aéronef, le système électrique comprenant de la circuiterie électronique configurée pour opérer une régulation d'un niveau de tension sous contrôle d'un dispositif de contrôle de régulation centralisé à partir d'un point de régulation variable déterminé parmi une pluralité de points de régulation prédéfinis et localisés chacun dans l'une ou l'autre des barres omnibus, en fonction de conditions opérationnelles de l'aéronef hybride.

Selon un mode de réalisation, le système est configuré pour permettre d'opérer séquentiellement la régulation d'un niveau de tension à partir de deux points de régulation prédéfinis, l'un puis l'autre, dont l'un, est défini dans une première barre omnibus, comprise dans une nacelle de moteur de l'aéronef, et l'autre est défini dans une deuxième barre omnibus, comprise dans le fuselage de l'aéronef.

Selon un mode de réalisation, le système électrique d'aéronef comprend en outre de la circuiterie électronique configurée pour :
- obtenir des informations représentatives desdites conditions opérationnelles de l'aéronef,
- déterminer un point de référence de régulation à utiliser à partir desdites informations obtenues, puis,
- configurer un ou plusieurs convertisseurs de puissance de sorte à opérer une régulation de tension ou de courant à partir dudit point de régulation déterminé.

Selon un mode de réalisation, le système électrique d'aéronef comprend en outre de la circuiterie électronique configurée pour déterminer un point de référence de régulation à utiliser à partir des informations obtenues par lecture d'une table d'informations associant une pluralité de combinaisons de conditions opérationnelles de l'aéronef, d'une part, et au moins un point de référence de régulation à utiliser pour chacune desdites combinaisons, d'autre part, ladite table étant mémorisée dans une mémoire d'informations dudit aéronef hybride.

Un autre objet de l'invention est un aéronef comprenant au moins un dispositif de contrôle de régulation centralisé tel que précédemment décrit opérant dans un système électrique d'aéronef.

Un autre objet de l'invention est un produit programme d'ordinateur comprenant des instructions de code de programme pour exécuter les étapes d'un procédé tel que précédemment décrit lorsque ce programme est exécuté par un processeur d'un dispositif de contrôle de régulation centralisé dans un système électrique d'un aéronef hybride ainsi qu'un support de stockage comprenant un tel produit programme d'ordinateur.

### BRÈVE DESCRIPTION DES DESSINS

[Fig. 1] illustre schématiquement un circuit électrique d'aéronef hybride, selon l'art antérieur ;
[Fig. 2] illustre schématiquement un circuit électrique d'aéronef hybride selon un mode de réalisation de l'invention ;
[Fig. 3] est un ordinogramme illustrant des étapes d'un procédé de régulation selon un mode de réalisation de l'invention ;
[Fig. 4] illustre un aéronef hybride comprenant un dispositif de contrôle de régulation centralisé selon un mode de réalisation, et ;
[Fig. 5] illustre schématiquement un exemple d'architecture interne d'un dispositif de contrôle de régulation centralisé de circuit électrique d'aéronef hybride selon un mode de réalisation.

### EXPOSÉ DÉTAILLÉ DE MODES DE RÉALISATION

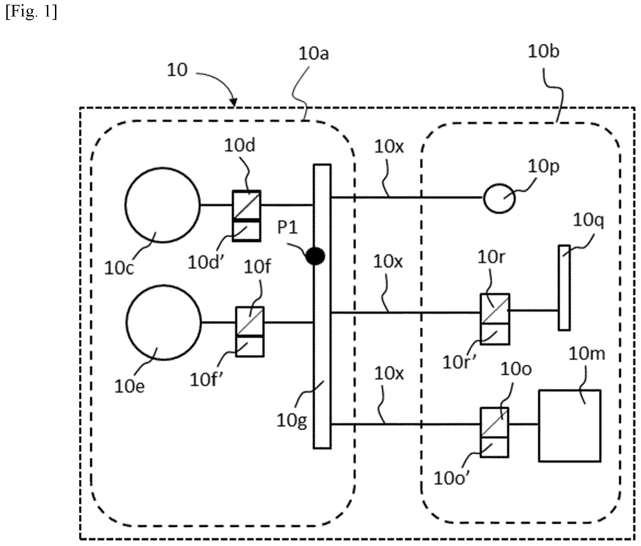

La Fig. 1 illustre schématiquement un système électrique 10 d'aéronef hybride selon l'art antérieur comprenant au moins un sous-système électrique 10a et un sous-système électrique 10b. Le sous-système électrique 10a comprend une première source d'énergie 10c et une deuxième source d'énergie10e respectivement connectées à une barre omnibus de transfert de puissance électrique 10g via un premier convertisseur de puissance 10d et via un deuxième convertisseur de puissance 10f. Chaque convertisseur de puissance est contrôlé par un dispositif contrôleur de convertisseur de puissance local qui lui est respectivement associé. Ainsi le convertisseur de puissance 10d est contrôlé par un dispositif contrôleur de convertisseur de puissance local 10d'; le convertisseur de puissance 10f est contrôlé par un dispositif contrôleur de convertisseur de puissance local 10f'. Selon l'exemple de système électrique décrit, la première source d'énergie 10c est un module de puissance dit « haute puissance » configuré pour opérer en relation avec un ensemble haute puissance d'un moteur d'aéronef hybride et la deuxième source d'énergie10e est un module de puissance dit « basse puissance » configuré pour opérer en relation avec un ensemble de puissance basse puissance d'un moteur de l'aéronef hybride. Les termes « source d'énergie » désignent ici une machine, un ensemble, un élément ou un module d'aéronef apte à opérer en mode moteur à propulsion à partir d'un courant électrique, ou d'une tension ou d'opérer en mode générateur de courant ou de tension à partir d'un couple mécanique, ainsi qu'un dispositif de stockage de courant électrique tel qu'une batterie, un supercondensateur ou un composant équivalent ou encore une combinaison de sources de même type ou d'un type différent aptes à transformer un courant en niveau de charge électrique d'un accumulateur de charges électriques et inversement. Les termes « convertisseur de puissance » désignent ici une machine, un ensemble, un élément ou un module d'aéronef apte à opérer une régulation en tension ou en courant, alternatif ou continu, à partir d'une source de tension ou de courant alternatif ou continu. Selon l'exemple décrit, la première source d'énergie 10c est apte à générer de l'énergie électrique délivrée sous forme de courant alternatif à partir d'un premier arbre mécanique en rotation selon un mode de fonctionnement en générateur, et de générer en outre un couple de rotation sur ce premier arbre mécanique à partir d'une énergie électrique sous forme de courant alternatif, selon un mode de fonctionnement moteur. Ainsi, le première source d'énergie électrique 10c est un transducteur de puissance réversible. La configuration de fonctionnement générateur ou moteur de la première source d'énergie dépend de conditions opérationnelles ou de modes d'opération contrôlés (pilotés) de l'aéronef qui l'embarque. Il en est de même pour la deuxième source d'énergie 10e. Ainsi, la deuxième source d'énergie 10e est apte à générer de l'énergie électrique délivrée sous forme de courant alternatif à partir d'un deuxième arbre mécanique en rotation selon un mode de fonctionnement en générateur, et de générer en outre un couple de rotation sur ce deuxième arbre mécanique à partir d'une énergie électrique sous forme de courant alternatif, selon un mode de fonctionnement moteur, en fonction de conditions opérationnelles ou de modes d'opération pilotés de l'aéronef qui l'embarque. Ainsi, la deuxième source d'énergie électrique est elle aussi un transducteur de puissance réversible.

L'énergie électrique ainsi fournie ou générée dans le premier sous-système 10a peut être convertie en énergie électrique sous forme de courant continu à des fins de transfert d'énergie électrique via la barre omnibus 10g et/ou de stockage dans une ou plusieurs batteries du système électrique 10 de l'aéronef. Ainsi, chacun des convertisseurs de puissance 10d et 10f est configuré pour opérer des conversions d'énergie électrique disponible sous forme de courant alternatif en énergie électrique disponible sous forme de courant continu, et inversement, selon les conditions opérationnelles ou les modes de fonctionnement pilotés de l'aéronef. Ces conversions de puissance électrique requièrent de mettre en œuvre des mécanismes de régulation électrique pour garantir que les caractéristiques des courants et des tensions en présence dans les différentes lignes électriques, ainsi que dans les différents composants et modules du sous-système 10a du système électrique 10 de l'aéronef demeurent dans des plages de valeurs de fonctionnement satisfaisantes à des conditions d'intégrité et de sécurité des systèmes, et à des conditions opérationnelles normales prédéfinies. De ce fait, les convertisseurs de puissance électrique 10d et 10f opèrent chacun des opérations de régulation en utilisant un premier point de référence de régulation électrique P1, utilisé pour opérer des asservissements en tension, et déterminé comme un point de la ligne électrique qu'est la barre omnibus 10g du sous-système électrique 10a.

Le sous-système électrique 10b du système électrique 10 de l'aéronef utilise ainsi la même barre omnibus de transfert de puissance électrique 10g à laquelle est reliée une batterie principale 10m via un convertisseur de puissance 10o commandé par un dispositif contrôleur local 10'o, et à laquelle est également reliée une barre omnibus de distribution d'énergie électrique 10q, via un quatrième convertisseur de puissance 10r contrôlé par un dispositif contrôleur local10'r qui lui est associé. La barre omnibus 10q est configurée et utilisée pour distribuer de l'énergie électrique vers de nombreux équipements embarqués de l'aéronef, par exemple des équipements de la cabine passagers. En outre, le sous-système électrique 10b comprend des moyens de connexion 10p à une source extérieure d'énergie électrique disponible sous la forme d'une source de courant continu. Divers équipements et circuits électriques de l'aéronef peuvent alors être alimentés en énergie électrique à partir d'une source extérieure d'énergie électrique, via les moyens de connexion 10p et/ou de la batterie principale 10m lorsque l'aéronef est stationné au sol. De plus, la batterie principale 10m peut être chargée à partir d'une source extérieure d'alimentation électrique via les moyens de connexion 10p. Les convertisseurs de puissance 10r et 10o opèrent des régulations électriques en courant ou en tension à partir du point P1 de référence électrique.

En outre, les sous-systèmes électriques 10a et 10b opèrent des transferts d'énergie électrique entre eux via au moins une liaison électrique 10x, par exemple lorsque la batterie principale alimente l'une ou plusieurs des sources d'énergie 10c et 10e configurées en mode moteur ou lorsque l'une ou plusieurs de ces sources en énergie fournit de l'énergie électrique au sous-système électrique 10b, selon un mode de fonctionnement en générateur. Comme déjà indiqué, de façon similaire aux mécanismes de régulation électrique réalisés dans le sous-système 10a, des mécanismes de régulation électrique sont opérés dans le sous-système électrique 10b pour opérer des régulations électriques visant à garantir que les caractéristiques des courants et des tensions en présence dans les différentes lignes électriques, ainsi que dans les différents composants et modules du sous-système électrique 10b du circuit électrique 10 de l'aéronef 100 demeurent dans des plages de valeurs de fonctionnement satisfaisantes à des conditions d'intégrité et de sécurité des systèmes et à des conditions opérationnelles normales prédéfinies. Pour ce faire, les convertisseurs de puissance électrique 10r et 10o opèrent chacun des opérations de régulation en utilisant le point de référence de régulation électrique P1, utilisé pour opérer des asservissements en tension ou en courant, et déterminé comme un point de la ligne électrique qu'est la barre omnibus 10g du sous-système électrique 10a. Dans le contexte spécifique d'un aéronef de type hybride, les configurations ou modes d'opérations peuvent être nombreux en ce sens qu'une source d'énergie peut opérer selon un mode moteur à un instant donné puis opérer selon un mode générateur à un autre instant. Cette multiplicité des combinaisons opérationnelles des différentes sources d'énergie et des différents convertisseurs de puissance est de nature à entraîner une grande variété de combinaisons de flux de transfert d'énergie électrique dans le système électrique 10 de l'aéronef, de nature à rendre complexes les opérations de régulations électriques nécessaires aux différents endroits du système électrique 10. En effet, d'importants transferts d'énergie électrique ainsi que de grandes longueurs de câbles entre la barre omnibus 10g (par exemple dans la nacelle) et les composants du sous-système 10b (dans le fuselage) peuvent perturber les mécanismes et opérations de régulation électrique respectivement opérés dans les sous-systèmes électriques 10a et 10b.

Par exemple, les convertisseurs de puissance 10d, 10f, et 10r peuvent être configurés pour opérer des conversions de puissance de courant alternatif vers du courant continu et inversement et le convertisseur de puissance 10o est configuré pour opérer des conversions de puissance de courant continu vers courant continu, de façon bidirectionnelle. Dans la forme de réalisation décrite dans ce qui suit, il est fait référence à une architecture dite « HVDC » (du sigle anglais « High-Voltage Direct Curent »), de type continu. Le principe est identique dans le cas d'une architecture dite « HVAC » (du sigle anglais « High-Voltage Alternative Curent »), c'est-à -dire à courant alternatif, le convertisseur pouvant alors être aussi un générateur.

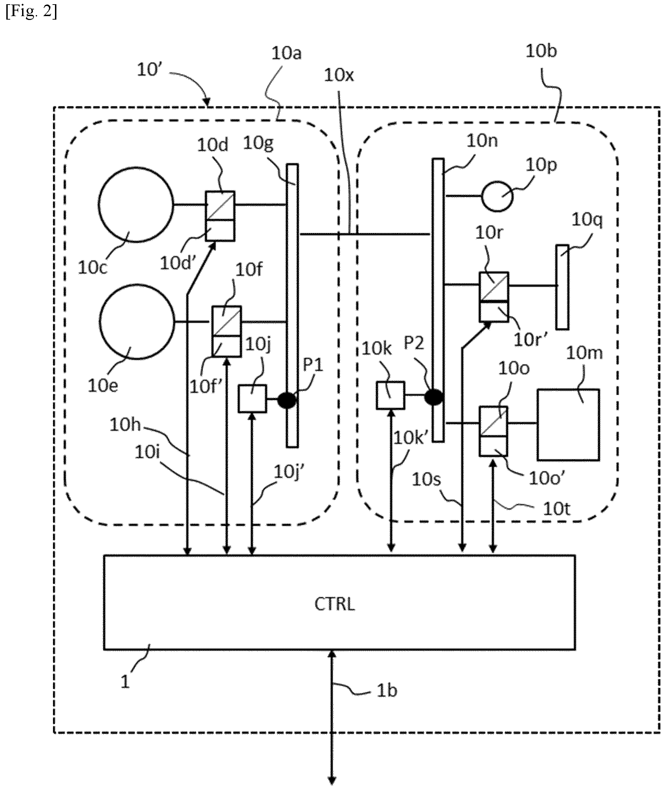

La Fig. 2 illustre schématiquement un système électrique 10' d'aéronef hybride comprenant un dispositif de contrôle de régulation centralisé CTRL 1 configuré pour superviser et contrôler de manière centralisée tout ou partie des contrôleurs locaux 10d', 10f', 10o', 10r' de convertisseurs de puissance 10d, 10f, 10o, 10r utilisés dans le système électrique 10' d'aéronef. Astucieusement et avantageusement, et selon un mode de réalisation schématiquement illustré sur la Fig. 2, le dispositif de contrôle de régulation centralisé CTRL 1 est connecté à chacun des contrôleurs 10d', 10f', 10o', 10r' de convertisseurs de puissance 10d, 10f, 10o et 10r, par un bus de contrôle de commande dédié du système électrique 10 d'aéronef hybride. Ainsi, le système électrique 10' comprend le système électrique 10 selon l'art antérieur dans lequel est inséré le dispositif de contrôle de régulation centralisé CTRL 1 ainsi que des moyens de communication entre ce contrôleur CTRL 1 et tout ou partie des contrôleurs locaux des convertisseurs de puissance 10d, 10f, 10o et 10r utilisés. Le système électrique 10' comprend également au moins deux barres omnibus 10g et 10n. Ces éléments combinés composent une circuiterie électronique configurée pour opérer une ou plusieurs régulation en tension selon les modes de réalisation décrits. L'ajout de barres omnibus permet de les agencer au plus proche des groupes de sources se trouvant dans un même environnement ou plus proches entre elles. Dans la configuration illustrée, une première barre omnibus 10g est agencée à proximité des sources 10c et 10e se trouvant dans l'environnement moteur et une deuxième barre omnibus 10n est agencée à proximité des sources 10m et 10q se trouvant dans le fuselage de l'aéronef. Le terme « à proximité » signifie que la barre omnibus se trouve plus proche d'une source d'énergie ou d'un groupe de sources d'énergie que d'une autre source d'énergie ou d'un autre groupe de sources d'énergie ; ici la barre 10g est plus proche des sources d'énergie 10c et 10e que des sources d'énergie 10m et 10q. Il est à noter que le terme « centralisé » du dispositif de contrôle de régulation centralisé signifie ici un contrôle de régulation centralisé au sens fonctionnel du terme : le dispositif de contrôle peut être physiquement centralisé mais peut aussi être réparti en plusieurs entités à différents endroits de l'aéronef.

Selon l'exemple décrit, le contrôleur 10d' du convertisseur de puissance 10d est configuré pour opérer sous contrôle du dispositif de contrôle de régulation centralisé CTRL 1, grâce à des commandes ou des informations envoyées via un bus de communication 10h ; le contrôleur 10f' du convertisseur de puissance 10f est configuré pour opérer sous contrôle du dispositif de contrôle de régulation centralisé CTRL 1, grâce à des commandes ou des informations envoyées via un bus de communication 10i ; le contrôleur 10'r du convertisseur de puissance 10r est configuré pour opérer sous contrôle du dispositif de contrôle de régulation centralisé CTRL 1, grâce à des commandes ou des informations envoyées via un bus de communication 10s et le contrôleur 10o' du convertisseur de puissance 10o est configuré pour opérer sous contrôle du dispositif de contrôle de régulation centralisé CTRL 1, grâce à des commandes ou des informations envoyées via un bus de communication 10t. Selon un exemple de réalisation, les commandes envoyées par le dispositif de contrôle de régulation centralisé CTRL 1 aux différents convertisseurs de puissance auxquels il est relié par l'intermédiaire des contrôleurs locaux correspondants sont conformes à un protocole prédéfini comprenant au moins des informations représentatives d'un point de référence de régulation électrique à utiliser parmi les points de référence électrique de régulation P1 et P2, pour opérer une régulation en tension de sa sortie ou de ses sorties.

Selon un mode de réalisation, les bus de communication 10h, 10i, 10s et 10t sont bidirectionnels et le dispositif de contrôle de régulation centralisé CTRL 1 peut lire des informations disponibles dans des champs d'informations internes des contrôleurs des dispositifs convertisseurs de puissance, telles que, à titre d'exemples des informations représentatives de performances de régulation établies en relation avec des valeurs cibles de performances de régulation.

Le dispositif de contrôle de régulation centralisé CTRL 1 est connecté à des dispositifs de mesure, tels que des capteurs, afin de pouvoir déterminer, *in fine,* quel est le point de référence de régulation électrique à utiliser parmi les points de référence de régulation P1 et P2 pour chacun des convertisseurs de puissance, à un instant donné, en fonction de la configuration opérationnelle ou des conditions opérationnelles de l'aéronef dans lequel il opère. Selon un mode de réalisation illustré sur la Fig. 2, des dispositifs ou modules de mesure 10j et 10k sont utilisés et configurés pour opérer respectivement des mesures aux points de référence P1 ou P2. Les dispositifs ou modules de mesure 10j et 10k comprennent chacun de la circuiterie électronique et au moins un capteur de tension relié à la barre de bus auquel il est associé. Le dispositif ou module 10j est en outre relié au contrôleur de régulation centralisé CTRL 1 via un bus de communication bidirectionnelle 10j'et le dispositif ou module 10k est en outre relié au contrôleur de régulation centralisé CTRL 1 via un bus de communication bidirectionnelle 10k'.

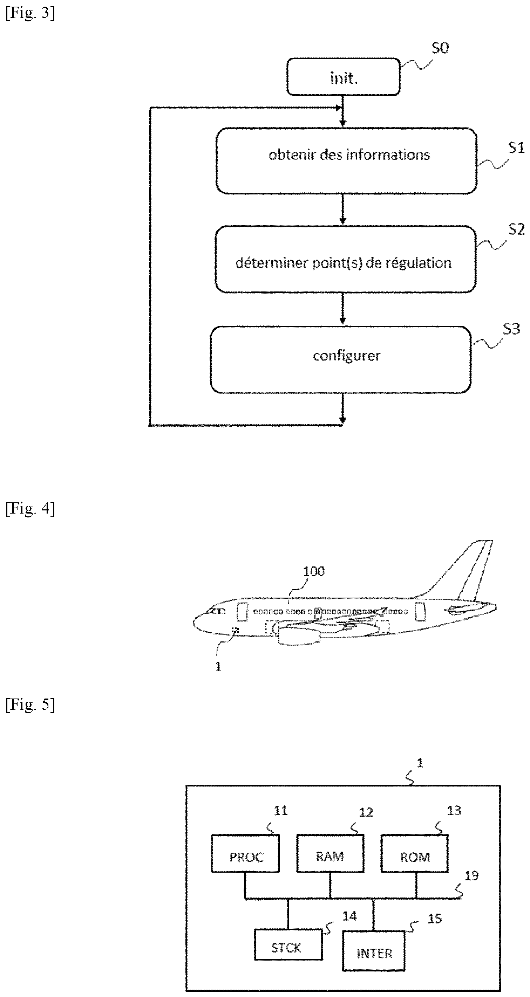

La **Fig. 3** est un diagramme illustrant des étapes d'un procédé de régulation électrique dans un système électrique d'un aéronef. Selon l'exemple de réalisation décrit, le procédé est exécuté par le dispositif de contrôle de régulation centralisé CTRL 1 de l'aéronef hybride 100 illustré en relation avec la **Fig. 4****.** Le procédé comprend une étape initiale **S0** au terme de laquelle tous les circuits et systèmes de l'aéronef hybride 100 sont activés et correctement opérationnels en vue d'effectuer des opérations en stationnement, au roulage ou en vol (décollage, montée, croisière, descente, approche et atterrissage, par exemple). Lors d'une étape **S1,** le dispositif de contrôle de régulation centralisé CTRL 1 obtient, via un bus de communication 1b, des informations représentatives de la configuration globale de l'aéronef hybride 100, laquelle dépend d'une phase de vol, et donc de conditions opérationnelles pilotées de l'aéronef hybride 100. Ces informations sont rendues disponibles au dispositif de contrôle de régulation centralisé CTRL 1, par un ou plusieurs modules avioniques de l'aéronef hybride 100. Ces informations peuvent être envoyées au dispositif contrôleur CTRL 1 par un ou plusieurs modules avioniques ou bien le dispositif de contrôle de régulation centralisé CTRL 1 peut les lire à partir (dans) d'un ou plusieurs modules avioniques. Par exemple, l'aéronef hybride 100 opérant dans une phase de montée peu après un décollage, est configuré pour opérer une propulsion principale à partir de moteurs thermiques et pour opérer une propulsion secondaire à partir de moteurs électriques alimentés à partir d'une ou plusieurs batteries principales. Selon un autre exemple, lors d'une phase de descente, des moteurs thermiques opèrent en générateur de courant (source d'énergie) pour alimenter des moteurs électriques de l'aéronef, permettant d'ajuster des conditions de vol selon un profil de descente continue. Ces exemples ne sont bien évidemment pas limitatifs. Lors d'une étape **S2,** le dispositif de contrôle de régulation centralisé CTRL 1 détermine une configuration de régulation électrique optimale à partir de la configuration des systèmes électriques de l'aéronef hybride 100, laquelle dépend des opérations pilotées de vol, ou en d'autres termes des conditions opérationnelles pilotées de l'aéronef hybride 100. Ainsi, en fonction du mode de fonctionnement de chacune des sources en énergie, opérant comme une charge (mode moteur) ou comme un générateur (injectant du courant dans le système électrique de l'aéronef), le dispositif de contrôle de régulation centralisé CTRL1 commande, lors d'une étape **S3,** tout ou partie des contrôleurs de convertisseurs de puissance en indiquant à chacun quel point de référence de régulation électrique doit être utilisé pour opérer une régulation électrique en courant ou en tension. Selon un mode de réalisation, pour obtenir le point de référence de régulation électrique souhaité en fonction des conditions opérationnelles, le dispositif de contrôle de régulation centralisé CTRL 1 détermine la configuration actuelle à partir des mesures effectuées par les dispositifs de mesure. Selon un mode de réalisation, le dispositif de contrôle de régulation centralisé comprend une mémoire dans laquelle est enregistrée une table faisant correspondre des points de référence de régulation électrique à des configurations données. Grâce à cette table, le dispositif de contrôle de régulation centralisé CTRL 1 détermine les points de référence de régulation à considérer et configure les convertisseurs de puissance en conséquence, via les contrôleurs locaux de convertisseur de puissance. Selon une première variante de réalisation, le dispositif de contrôle de régulation centralisé CTRL 1 détermine un point de référence de régulation à utiliser à partir de mesures de performances de régulation réalisées dans la configuration courante (actuelle) du système de régulation, grâce notamment à des capteurs de tension, et configure un ou plusieurs convertisseurs de puissance en conséquence. Selon une deuxième variante de réalisation, le dispositif de contrôle de régulation centralisé CTRL 1 détermine un point de référence de régulation à utiliser à partir d'une lecture de la table mémorisée et d'un niveau de performances de régulation dans la configuration courante du système de régulation, lequel niveau est déterminé par des mesures à l'aide de capteurs de niveaux de tension. Ensuite, le procédé revient à l'étape S1, pour s'exécuter itérativement, ce qui permet avantageusement d'opérer une régulation électrique dynamiquement selon les différentes étapes (ou phases) de stationnement, de roulage, et de vol qui constituent ensemble un vol de l'aéronef hybride 100. Avantageusement, il est possible d'opérer séquentiellement une régulation d'un niveau de tension à partir d'un premier point de référence électrique de régulation, puis à partir d'un deuxième point de référence électrique de régulation. Par exemple, il peut être opportun d'opérer une régulation d'un niveau de tension par un convertisseur de puissance en utilisant un point de référence de la barre omnibus la plus proche de ce convertisseur de puissance. Selon un exemple, lorsqu'une source principale de puissance est la batterie, un convertisseur de puissance régulant une tension en aval de la batterie utilisera la barre omnibus la plus proche de la batterie, « côté fuselage », alors qu'à un autre instant, dans le cas d'une source principale d'énergie électrique établie au niveau d'un moteur thermique, par exemple, la régulation de tension sera effectuée par le convertisseur associé opérant une régulation à partir du point de référence de la barre omnibus située « côté nacelle », proche de ce moteur. Il est possible, d'avoir séquentiellement, pour un convertisseur de puissance, une régulation électrique opérée avec pour point de référence électrique le point P1, puis P2, puis P2 encore, puis P1 à nouveau, etc. Cet exemple n'étant bien évidemment pas limitatif.

La **Fig. 5** est une représentation schématique d'un exemple d'architecture interne du dispositif de contrôle de régulation centralisé CTRL 1 tel qu'embarqué dans l'aéronef hybride 100. Selon l'exemple d'architecture matérielle représenté à la Fig. 5, le dispositif de contrôle de régulation centralisé CTRL 1 comprend alors, reliés par un bus de communication 19 : un processeur ou CPU (« Central Processing Unit » en anglais) 11 ; une mémoire vive RAM (« Random Access Memory » en anglais) 12 ; une mémoire morte ROM (« Read Only Memory » en anglais) 13 ; une unité de stockage telle qu'un disque dur (ou un lecteur de support de stockage, tel qu'un lecteur de cartes SD (« Secure Digital » en anglais) 14 ; un module d'interfaces de communication 15 permettant au dispositif de contrôle de régulation centralisé CTRL 1 de communiquer avec des dispositifs distants, tels que d'autres systèmes embarqués de l'aéronef hybride 100, notamment via le bus de communication 1b.

Le processeur 11 du dispositif de contrôle de régulation centralisé CTRL 1 est capable d'exécuter des instructions chargées dans la RAM 12 à partir de la ROM 13, d'une mémoire externe (non représentée), d'un support de stockage (tel qu'une carte SD), ou d'un réseau de communication. Lorsque le dispositif de contrôle de régulation centralisé CTRL 1 est mis sous tension, le processeur 11 est capable de lire de la RAM 12 des instructions et de les exécuter. Ces instructions forment un programme d'ordinateur causant la mise en œuvre, par le processeur 11 du dispositif de contrôle de régulation centralisé CTRL 1, de tout ou partie d'un procédé de régulation électrique décrit en relation avec la Fig. 3 ou de variantes décrites de ce procédé.

Tout ou partie du procédé décrit en relation avec la Fig. 3 ou ses variantes décrites peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le dispositif de contrôle de régulation centralisé CTRL 1 comprend de la circuiterie électronique configurée pour mettre en œuvre le procédé décrit en relation avec lui-même. Bien évidemment, le dispositif de contrôle de régulation centralisé CTRL 1 comprend en outre tous les éléments usuellement présents dans un système comprenant une unité de contrôle et ses périphériques, tels que, un circuit d'alimentation, un circuit de supervision d'alimentation, un ou plusieurs circuits d'horloge, un circuit de remise à zéro, des ports d'entrées-sorties, des entrées d'interruptions, des drivers de bus, cette liste étant non exhaustive.

L'invention ne se limite pas aux seuls exemples et modes de réalisation décrits mais plus généralement à tout allocation dynamique d'un ou plusieurs points de référence de régulation électrique d'un système électrique d'aéronef hybride, sous contrôle d'un dispositif contrôleur dédié et centralisé, dans le but d'opérer une régulation en courant ou en tension d'un circuit convertisseur de puissance, en fonction de conditions opérationnelles pilotées d'un aéronef hybride.

## Revendications

1. Procédé de contrôle d'un système électrique (10') d'un aéronef hybride (100), ledit système électrique (10') comprenant au moins deux barres omnibus (10g, 10n) configurées pour opérer des transferts d'énergie électrique dans ou entre plusieurs sous-systèmes (10a, 10b) dudit système électrique (10') d'aéronef, ledit procédé étant **caractérisé en ce qu'**il comprend au moins une régulation d'un niveau de tension à partir d'un point de référence de régulation variable (P1, P2), déterminé sous contrôle d'un dispositif de contrôle de régulation centralisé, parmi une pluralité de points de référence de régulation prédéfinis (P1, P2) et localisés chacun dans l'une ou l'autre desdites barres omnibus (10g, 10n), en fonction de conditions opérationnelles dudit aéronef hybride (100).

2. Procédé de contrôle selon la revendication 1, selon lequel ladite régulation d'un niveau de tension est opérée séquentiellement à partir de deux points (P1, P2) de régulation prédéfinis, l'un puis l'autre, dont l'un, est défini dans une première barre omnibus, comprise dans une nacelle de moteur dudit aéronef, et l'autre est défini dans une deuxième barre omnibus, comprise dans le fuselage dudit aéronef.

3. Procédé de contrôle selon la revendication 2, selon lequel ladite régulation d'un niveau de tension opérée séquentiellement comprend des étapes :
- obtenir (S1) des informations représentatives desdites conditions opérationnelles de l'aéronef,
- déterminer (S2) un point de référence de régulation à utiliser à partir desdites informations obtenues, puis,
- configurer (S3) un ou plusieurs convertisseurs de puissance de sorte à opérer une régulation de tension ou de courant à partir dudit point de régulation déterminé.

4. Procédé de contrôle selon la revendication 3, selon lequel ladite détermination d'un point de régulation à utiliser à partir desdites informations obtenues comprend une lecture d'une table d'informations associant une pluralité de combinaisons de conditions opérationnelles de l'aéronef, d'une part, et au moins un point de référence de régulation à utiliser pour chacune desdites combinaisons, d'autre part, ladite table étant mémorisée dans une mémoire d'informations dudit aéronef hybride.

5. Système électrique (10') d'aéronef hybride, ledit système électrique (10') comprenant au moins deux barres omnibus (10g, 10n) configurées pour opérer des transferts d'énergie électrique dans ou entre plusieurs sous-systèmes (10a, 10b) dudit système électrique (10') d'aéronef, ledit système électrique (10') étant **caractérisé en ce qu'**il comprend de la circuiterie électronique comprenant un dispositif de contrôle de régulation centralisé (CTRL 1) et configurée pour opérer une régulation d'un niveau de tension sous contrôle dudit dispositif de contrôle de régulation centralisé (CTRL 1), à partir d'un point de régulation (P1, P2) variable déterminé parmi une pluralité de points de régulation (P1, P2) prédéfinis et localisés chacun dans l'une ou l'autre desdites barres omnibus (10g, 10n), en fonction de conditions opérationnelles dudit aéronef hybride (100).

6. Système électrique d'aéronef selon la revendication 5, comprenant en outre de la circuiterie électronique configurée pour permettre d'opérer séquentiellement ladite régulation d'un niveau de tension à partir de deux points de régulation (P1, P2) prédéfinis, l'un puis l'autre, dont l'un (P1), est défini dans une première barre omnibus (10g), comprise dans une nacelle de moteur dudit aéronef (100), et l'autre (P2) est défini dans une deuxième barre omnibus, comprise dans le fuselage dudit aéronef (100).

7. Système électrique d'aéronef selon la revendication 6, comprenant en outre de la circuiterie électronique configurée pour :
- obtenir (S1) des informations représentatives desdites conditions opérationnelles de l'aéronef,
- déterminer (S2) un point de référence de régulation à utiliser à partir desdites informations obtenues, puis,
- configurer (S3) un ou plusieurs convertisseurs de puissance de sorte à opérer une régulation de tension ou de courant à partir dudit point de régulation déterminé.

8. Système électrique d'aéronef selon la revendication 7, comprenant en outre de la circuiterie électronique configurée pour déterminer un point de référence de régulation à utiliser à partir desdites informations obtenues par lecture d'une table d'informations associant une pluralité de combinaisons de conditions opérationnelles de l'aéronef, d'une part, et au moins un point de référence de régulation à utiliser pour chacune desdites combinaisons, d'autre part, ladite table étant mémorisé dans une mémoire d'informations dudit aéronef hybride.

9. Aéronef (100) comprenant au moins un système électrique d'aéronef selon l'une des revendications 5 à 8.

10. Produit programme d'ordinateur comprenant des instructions de code de programme pour exécuter les étapes d'un procédé selon l'une des revendications 1 à 4 lorsque ce programme est exécuté par un processeur d'un dispositif de contrôle d'un aéronef (100).

11. Support de stockage comprenant un produit programme d'ordinateur selon la revendication 10.
